# EUROPEAN PATENT SPECIFICATION

(11) **EP 0 802 397 B1**
(45) Date of publication and mention of the grant of the patent: **25.06.2003**
(21) Application number: 97105777.3
(22) Date of filing: 08.04.1997
(51) Int. Cl.: G01C 19/72

(54) **Fiber optic gyroscope**
Optischer Faserkreisel
Gyroscope à fibre optique

(30) Priority: 19.04.1996 US 15884
(43) Date of publication of application: 22.10.1997
(73) Proprietor: KVH Industries, Inc., Middletown, RI 02842 (US)
(72) Inventor: Emge, Steven R., Mokena, IL 60448 (US); Bennett, Sidney M., Chicago, IL 60614 (US)
(74) Representative: Patentanwälte Westphal, Mussgnug & Partner

(56) References cited:
- EP-A- 0 551 874
- EP-A- 0 586 242
- DE-A- 3 742 201
- US-A- 4 776 700
- US-A- 4 842 409
- US-A- 4 848 910

## Description

### FIELD OF THE INVENTION

The present invention relates to gyroscopes. Specifically, the invention relates to gyroscopes and their signal processing electronics.

### BACKGROUND

The interferometric fiber optic gyroscope (IFOG) is an established technology for accurately measuring angular rotation. Because the IFOG is an optical, solid state design with no moving parts, it can be used for long life, high reliability applications such as land vehicle navigation.

Requirements for a gyroscope intended for use in land navigation systems with coupled dead-reckoning (DR) and GPS (Global Positioning System) input are governed more by cost than by performance considerations. The gyro is used as a gap filler for those systems where no outage is permissible. The GPS data can then be used to periodically correct the dead reckoning sensors, reducing the demands on each. The cost of this type of land navigation system is heavily dependent on the cost of the gyroscope employed. Although the wide performance range of the IFOG makes it well suited for applications such as land navigation, further cost reduction in the gyroscope optical configuration and electronic signal processing is required to make this technology economical to use for many systems such as land navigation systems.

The fundamental working principal behind the IFOG is the Sagnac effect. In this effect, two counter-propagating waves traversing a loop interferometer acquire a phase difference if the loop is rotated about its axis. The IFOG uses fiber optic components to form the Sagnac interferometer. Accurate measurement of the Sagnac phase difference induced by rotation requires the parasitic phase differences, which can vary with environment, be suppressed. For this reason the principal of optical reciprocity is used to select portions of the counter-propagating waves which pass through the interferometer along a common path. Variations of the system by the environment changes the phase of both waves equally and no difference in phase delay results; the sensor is environmentally stable. The use of optical reciprocity in the IFOG architecture results in what is commonly referred to as the ''minimum configuration."

In the minimum configuration (MC) IFOG the light is emitted from the source, passes through the first coupler where half of the light is dissipated, and half is sent into the interferometer through the polarizer. A second coupler splits the light into two approximately equal intensity, counter-propagation beams which traverse the coil. The two light beams then recombine at the second coupler where they interfere. This combined light beam then passes through the polarizer a second time in the opposite direction, and half of the light is directed to the detector by the first coupler. The first coupler is not part of the optically reciprocal Sagnac interferometer. Its sole purpose is to direct some of the returning light into a detector and to minimize direct coupling of light energy from the source to the detector. To maximize the optical power incident on the detector, the optimum splitting ratio of this coupler is 3 dB. This leads to an inherent 6 dB of system toss since this coupler is passed twice; it is independent of the coupler insertion loss.

In order to reduce the optical configuration complexity and cost, yet maintain the principal of reciprocity, a "reduced minimum configuration" is used. In the reduced minimum configuration (RMC) IFOG, the first coupler has been removed and the interferometer output is read out through a detector positioned at the back facet of the light source. The light passes through the source cavity before being received by the detector. The RMC gyroscope maintains the principal of optical reciprocity since the light still traverses a common optical path. The inherent system loss of 6 dB from the first coupler is eliminated. Also, depending on the type of light source chosen, and the drive current operating range, the source can act as an optical amplifier for the returning light. Therefore, the signal-to-noise ratio of the RMC gyroscope is as good, and potentially can be better than the conventional MC gyroscope design. Many low cost laser diode packages contain a back facet photo-detector. Thus. the detector is provided by the laser diode manufacturer and the cost of purchasing a separate detector is eliminated in this design. Also, the equipment and labor needed to align the first coupler output fiber to a separate detector is eliminated. The detector is aligned to the back facet by the manufacturer of the laser diode. When the input fiber pigtail is aligned to the optical source, the output is automatically aligned to the detector in the same operation. The RMC also eliminates two fiber-to-fiber fusion splices, further reducing the optical assembly cost.

A piezo-electric transducer (PZT) is used in both types of IFOGs to modulate the phase difference between the two counter-propagating light beams. This phase modulation serves two purposes. One is to move or bias the interferometer to a more sensitive operating point. The other is to move the detected signal from DC to AC in order to improve the accuracy of the electrical signal processing. With sinusoid phase modulation, the interferometer output signal is a infinite series of sine and cosine waveforms whose amplitudes are Bessel function related. The fundamental signal is at the applied modulation frequency with subsequent odd and even harmonic signals. Many signal processing approaches have been proposed which use the ratio of the first four harmonic signals amplitudes to detect rotation rate while at the same time maintaining a stable, linear output scale factor. However, implementation of these approaches in analog and/or digital electronic hardware is complex and expensive. Also, the use of the light source as both a light emitter and amplifier is not without problems. Distortion of the interferometer signal can occur due to traversing the light source prior to detection and due to bandwidth limitations of the back facet photo-detector. The signal harmonic amplitudes can be altered leading to a measured output rotation scale factor error if the RMC gyroscope design is used with the conventional harmonic ratio signal processing methods. This is a significant drawback in multiharmonic processing methods. Therefore, a much simpler signal processing design, which is not affected by an error in the relative amplitude of the gyroscope harmonic signals is desired.

Scale factor linearity (i.e. measured output rate versus input rate applied) is maintained due to the intrinsic linearity of the Sagnac effect for the rotation rate range used and is a sinusoid for larger rates. However, the more difficult problem is maintaining a constant scale factor during environment changes (i.e. temperature, vibration, etc.) and over the life time of the sensor. EP 0551 874 A2 discloses a fiber optic gyro with a semiconductor light emitting element of the type emitting forward and backward light beams. The output of a photodetector is synchronously detected by a modulating signal, thereby detecting an angular rate applied to the optical fiber coil. A DC component of the electric photodetector signal is utilized as a control signal by a light amount stabilizer to keep constant the power of light of the forward light beam. The DC component of the photodetector signal depends on the fiber coupling changes and temperature dependent changes in the laser efficiency and is therefore not useful for maintaining a constant scale factor. Moreover, the use of the DC component of the light emitted from the back facet does not permit the correction for changes in gyro optical circuit insertion loss, which is also known to change with temperature, to the extent that a significant scale factor error would result. Also, DC amplifiers are notoriously unstable with temperature.

US 4 776 700 describes a fiber optic gyroscope with improved dynamic range and scale factor stability which includes means for demodulating the detected output of the gyroscope to yield first and second voltage levels, respectively, proportional to the sine and cosine components of that detected output. These first and second voltage levels are respectively switched between a feedback network which stabilizes the drive level.

EP 0 586 242 A1 discloses a gyroscope of a phase-modulation type. An APC (Automatic Power Controller) circuit drives a light emitting device to emit light beams by supplying a pertinent current. A monitoring photodiode monitors the light power emitted backward from light source. The output of the monitoring photo diode is connected via a resistor to the APC circuit for controlling the drive current of the light source.

US 4 842 409 describes a ring interferometer device with a mono-mode optical fiber, a radiation separator and a mode filter coupled optically to a coherent light source. The source can be a semiconductor diode of the type operating alternately as light emitter and receiver depending on the biasing. Alternatively, the source can be a light emitting semiconductor diode coupled by its front face to the mode filter and by its rear face to a detector, said diode acting as light amplifier.

DE 37 42 201 A1 discloses a detector attached to the rear facet of a semiconductor laser or superluminescent diode. The output signal of the detector is a DC signal with a superimposed AC signal which includes the modulation frequency f_{mod} and its harmonics n x f_{mod}. The two portions of the signal are separated from each other by the filter. The DC signal is supplied to a control electronics which controls the power of the light source, wherein the control electronics stabilizes the power of the light source through the bias current.

US 4 848 910 discloses an optical fiber interferometer system with an optics board and an electronics board that provides phase modulation and amplitude modulation. The board includes a modulator for modulating the optical power of the laser diode and a frequency synthesizing generator. The power modulator is stabilized by a feedback loop including the photodetector coupled to the rear face of the laser diode. The photodetector delivers a signal which is proportional to the light power which it receives from the laser diode, either directly, either after it has passed round the interferometer ring and come back through the laser diode. This signal comprises a main component at the frequency fl at which the light power emitted by the diode is modulated, and a component at a very much lower amplitude coming from the beats between the two counter-propagating light beams which are modulated both in amplitude and in phase and which have passed back through the laser diode on returning from the interferometer ring.

### SUMMARY OF THE INVENTION

It is an object of the present invention to provide an IFOG signal processing system which performs well for both the MC and RMC gyroscope designs.

It is a further object of the present invention to provide an IFOG signal processing system which is simple and low-cost to produce.

It is a yet another object of the invention to provide an IFOG system which accurately determine rotation rate of the sensor coil.

It is still another object of the invention to provide an IFOG system which maintains a constant scale factor during environmental changes.

It is a further object of the invention to provide an IFOG system with simplified signal processing electronics and which eliminates non-essential optical components and splices.

The foregoing objects are provided by an improved IFOG system which comprises gyro means for receiving a light beam, splitting said light beam into two parts, and producing a gyro signal, detection means for sensing the gyro signal, modulator means for modulating phase differences of said light parts in said gyro means, means for adjusting the depth of phase modulation of said modulator means and means for maintaining a constant output of a detection means.

### BRIEF DESCRIPTION OF THE DRAWINGS

FIG. 1 is a schematic drawing showing an IFOG system according to principles of the current invention;
FIG. 2 is a schematic drawing showing an IFOG system according to principles of the current invention;
FIG. 3(a) is a graph of performance data in the form of an Allan variance analysis for a minimum configuration IFOG system of the current invention;
FIG. 3(b) is a graph of performance data in the form of bias temperature sensitivity for minimum configuration IFOG of the current invention;
FIG. 4(a) is a graph of performance data in the form of an Allan variance analysis for a reduced minimum configuration IFOG system of the current invention;
FIG. 4(b) is a graph of performance data in the form of bias temperature sensitivity for a reduced minimum configuration IFOG of the current invention; and
Table 1 is a table of performances of minimum configuration and reduced minimum configuration gyroscope system performance of the present invention.

### DETAILED DESCRIPTION OF THE PREFERRED EMBODIMENT

While the invention is susceptible to various modifications and alternative forms, specific embodiments thereof have been shown by way of example in the drawings and will herein be described in detail. It should be understood, however, that this is not intended to limit the invention to the particular forms disclosed, but on the contrary, the intention is to cover all modifications, equivalents, and alternatives falling within the spirit and scope of the invention as defined below.

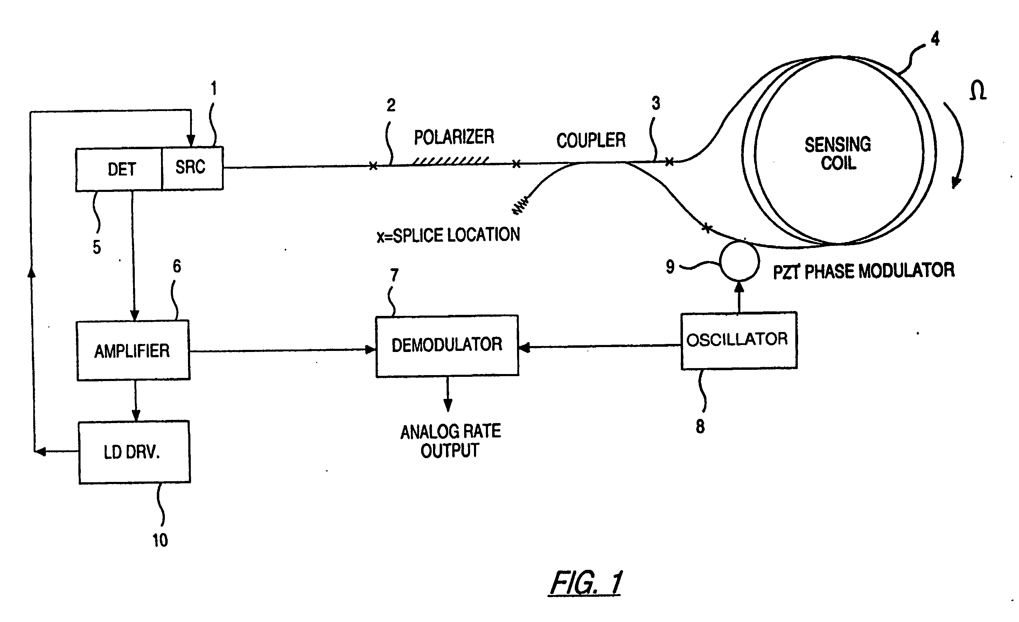

An improved IFOG system of the present invention is described below and illustrated in FIG. 1. Light source 1 emits light which is polarized by polarizer 2. The light is split by second coupler 3 into two equal intensity, counter-propagating beams which traverse the sensing coil 4 and then combine and interfere at the second coupler 3. The newly combined light beam then passes through the cavity of source 1 and is received by detector 5. Detector 5 is photodetector and transimpedance amplifier with light as an input and voltage as an output. The output of detector 5 is passed through amplifier 6 which increases the sensor's output signal to a detectable level. The total electrical gain is around one million in this embodiment. The amplifier output is applied to demodulator 7. Demodulator 7 is a phase sensitive detector which receives a signal from oscillator 8. If the phase and frequencies of the two signals entering demodulator 7 are the same, the output is at a maximum, if they are difterent, the output is reduced. Oscillator 8 and PZT phase modulator 9, as will be explained in greater detail below, maintain the interferometer depth of phase modulation. LD driver 10, as will be explained in greater detail below, is a high pass filter and rectifier which regulates the intensity of the light source current.

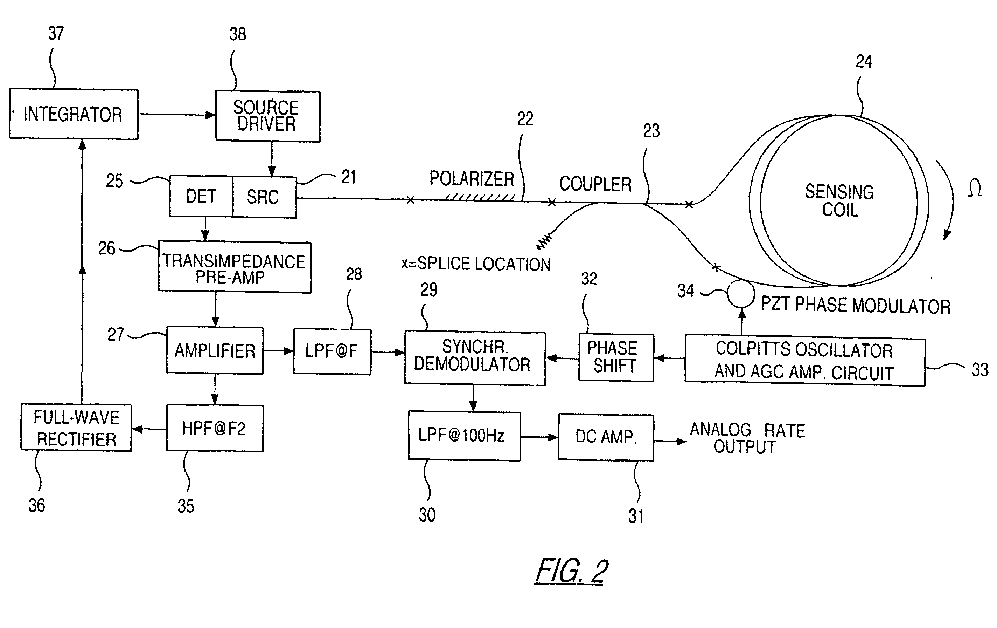

Another embodiment of the improved IFOG system of the present invention is illustrated in FIG. 2. Light source 21 emits light which is polarized by polarizer 22. The light is split by coupler 23 into two approximately equal intensity, counter-propagating beams which traverse the sensing coil 24 and then combine and interfere at the coupler 23. The newly combined light beam then passes through the cavity of source 21 and is received by detector 25. The detector is a photo detector receiving light as an input and producing current as an output.

Many low cost semiconductor light source packages contain a back facet photo detector. Thus, the detector is provided by a light source manufacturers. Using this approach, the cost of purchasing a separate detector is eliminated. The detector 25 is aligned with the back facet by the manufacturer of the light source. When the input fiber pigtail is aligned to the optical source, the output is automatically aligned to the detector in the same operation. This approach also eliminates several fiber splices. Integration of the polarizer onto this coupler combined with pigtailing the coupler/polarizer assembly onto the light source could further reduce the number of optical splices.

For most land navigation applications, the input rotation rate range of the vehicle is limited by the speed and turning radius of the vehicle. For example, for high performance cars, a maximum rate range of +/- 100°/sec is sufficient. Because of this limitation, the sensing coil's Sagnac scale factor can be designed so that this maximum rate range is well within an essentially linear region of the gyroscope output transfer function. The sensing coil is constructed using a short fiber coil length wound on a small diameter bobbin. With this type of construction, the rotation rate can be directly determined from the amplitude of the fundamental or first harmonic signal. Since the phase and frequency of the fundamental signal are well known, the most effective way to determine the amplitude is by synchronous demodulation.

The gyro broad band signal is passed through transimpedence pre-amplifier 26 which converts the current to voltage and amplifier 27 which amplifies the voltage signal to a detectable level. This voltage signal is then applied to a low pass filter (LPF) 28 whose corner frequency is at the fundamental frequency F 1 prior to the synchronous demodulation process. The low pass filter 28 removes all harmonics from the voltage signal leaving only the fundamental frequency. The signal is then passed to synchronous demodulator 29. Synchronous demodulator 29 has as its other input a voltage signal which has originates from a Colpitts oscillator and amplifier circuit 33. As the output of circuit 33 is passed through phase shifter and low pass filter 32, the signal is locked into the fundamental frequency with the same phase shift as the signal provided from amplifier 27. The output of demodulator 29 is at a maximum when the phases and frequencies of its input signals are equal, and is proportional to the magnitude of the gyro output signal at the modulation frequency. This output is passed through low pass filter 30 where a DC signal proportional to the rotation rate is created. Finally, DC amplifier 31 amplifies the resultant signal. The demodulation produces a linear output over a very wide dynamic input rate range. Resolution of the rotation measurement is determined by the noise figure of the transimpedance pre-amplifier 26 used and the bandwidth of the measurement.

Maintaining a constant scale factor during environmental changes requires that two gyro operating points be accurately maintained. First, the amount of gyro signal at the output of the amplifier 27 must be constant. To accomplish this, the invention takes advantage of the fact that for short coil length sensors, the amplitude of the second harmonic signal F2 is relatively constant over the entire rate range. Thus, the broad-band gyro signal is high pass filtered (HPF) at the second harmonic frequency F2 by high pass filter 35, rectified by full-wave rectifier 36, integrated and compared by integrator 37, and applied to source 21 by source driver 38. The resulting DC signal is used to servo the detected optical power at source 21 to a constant by increasing or decreasing the light source current and therefore source optical power. High pass filter 35 may be required to reduce the influence of the fundamental signal F1 on the power leveling circuit at high rotation rates.

The second important gyro operating point which must be maintained is the interferometer depth of phase modulation controlled at PZT phase modulator 34. The depth of phase modulation is set by the amplitude of the sine wave drive voltage applied to the PZT phase modulator 34. However, only maintaining a fixed frequency and amplitude sine wave drive will not guarantee a fixed depth of phase modulation. Over time and environment the resonant frequency (Fr) of the PZT modulator 34 will drift. Also, the mechanical to optical phase shift conversion scale factor (Qm) will vary. As discussed above, the invention uses the PZT phase modulator 34 as an active part of the oscillator circuit by applying the output of Colpitts oscillator and adjustable gain control (AGC) amplifier 33 to phase shifter and low pass filter 32 (set at the first fundamental frequency). Because the PZT modulator 34 is part of the active feedback circuit, any movement in the PZT resonant frequency is tracked. Changes in Qm and Fr also change the dynamic impedance of the PZT effecting the drive amplitude. The Colpitts oscillator and AGC amplifier 33 is used to maintain a stable sine wave drive amplitude through environment, although other self-resonant oscillators could also be used.

Thus, a gyro system with simplified signal processing electronics is provided where the fundamental gyro signal amplitude is synchronously demodulated to determine the rotation rate of the sensor. The second harmonic gyro signal is used to control the light source intensity. Taking the ratio of these signals is not required. The depth of phase modulation is maintained by using a self resonant oscillator approach with the PZT as part of the active electrical circuit. This configuration eliminates non-essential optical components and splices from the system, allowing for the construction of a lower cost gyroscope. Using the reduced minimum configuration gyroscope with this simplified signal processing electronics approach produces a very attractive cost-to-performance ratio rotation rate sensor for use in many land vehicle navigation applications, such as applications requiring the use of dead-reckoning sensors coupled to GPS systems. The IFOG signal processing system is simple and low-cost to produce, accurately determines rotation rate of the sensor coil, and maintains a constant scale factor during environmental changes.

In an alternative embodiment, a minimum configuration IFOG, rather than a reduced minimum configuration IFOG can be used with the signal processing electronics described above with reference to FIG. 2. In this embodiment, the source/ detector arrangement is replaced by a laser and detector, and a first coupler is inserted between the laser and the polarizer. The operation of the rest of the circuit is as described above. Using the minimum configuration gyroscope with this simplified signal processing electronics approach produces a very attractive cost-to-performance ratio rotation rate sensor for use in many land vehicle navigation applications, such as applications requiring the use of dead-reckoning sensors coupled to GPS systems. The IFOG signal processing system is simple and low-cost to produce, accurately determines rotation rate of the sensor coil, and maintains a constant scale factor during environmental changes.

In actual experiments two gyro systems were constructed and tested. The first unit was a standard open-loop, all-fiber, minimum configuration as described in the preceding paragraph. The second unit was identical, except modified by removing the first coupler and detecting the gyro signal from the laser back facet diode as described above in connection with FIG. 2. All optical components were fabricated using Andrew Ecore® polarization maintaining (PM) fiber. The Sagnac coil length used was 75 meters with a nominal diameter of 65 mm. The modulator was constructed by wrapping fiber around a piezo-electric transducer (PZT). A standard compact disc laser diode light source was used. The optical circuit was integrated with a analog demodulator electronics board in a rectangular form factor (4.25 x 3.25 x 1.5 inches) assembly which weighed 0.55 pounds. The unit operated at +12 VDC unconditioned power, such as would be found in an automobile, and the output was a differential analog voltage. A total power consumption of two watts was typical for the completed gyroscope with electronies.

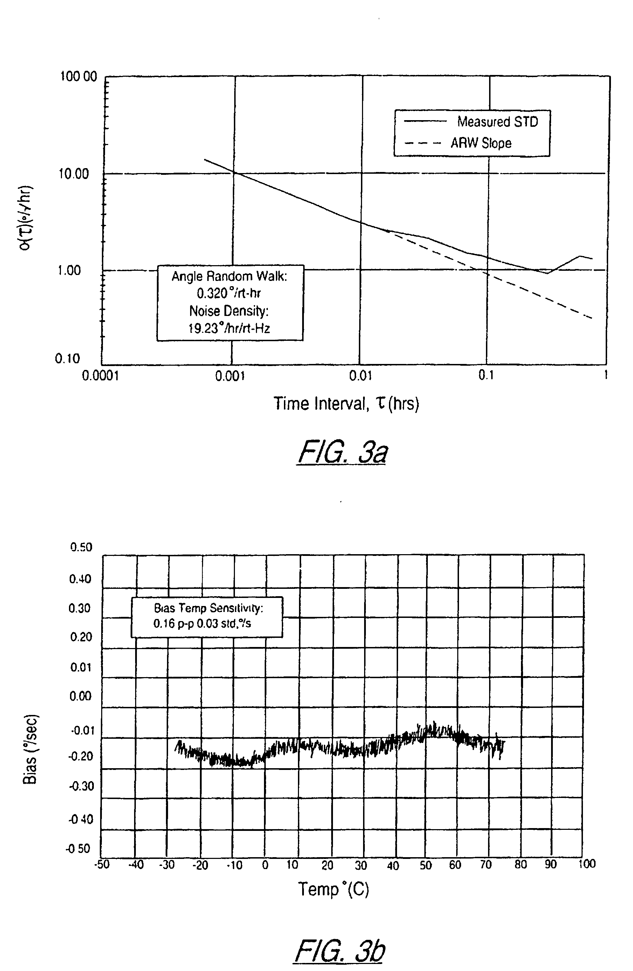

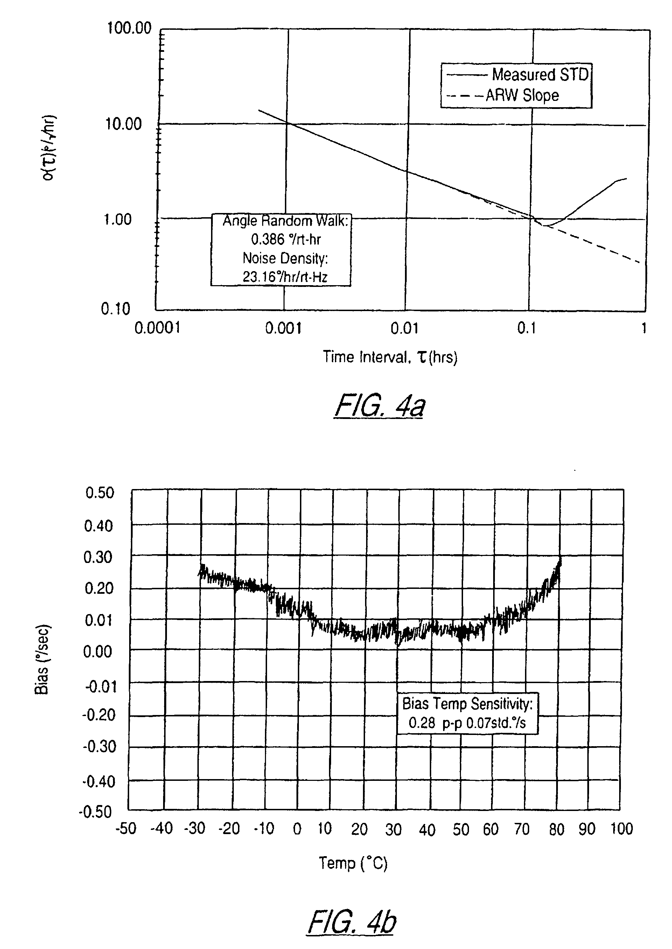

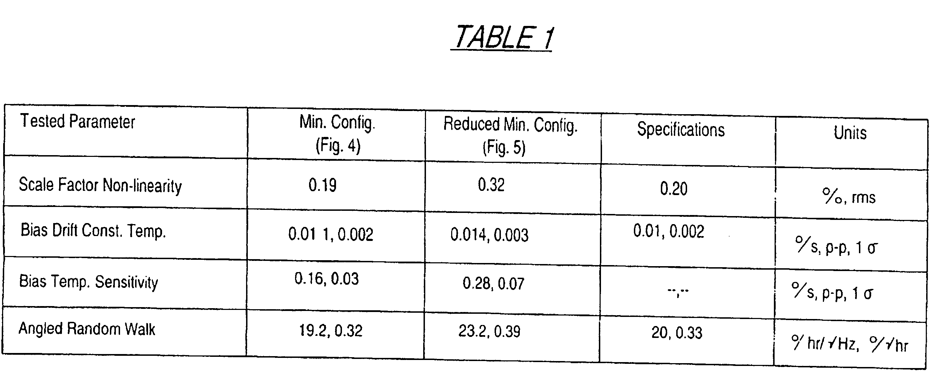

Both gyro configurations were run through a battery of tests to measure key performance parameters. A summary of the results compared to a commercially available part, the Andrew AUTOGYRO® Navigator, is shown in Table 1. FIGs. 3a and 4a compare the angle random walk (ARW) and bias stability, determined by Allan variance analysis, of the minimum versus the reduced minimum configuration gyros. Both gyros had ARW figures of approximately 20 °/hr/√Hz,and bias stability limits of 1 °/hr after 12 minutes of elapsed time. FIG. 3b and 4b compare the bias of temperature sensitivity. A temperature range of -40 to +75 ° C was used for this test. The conventional minimum configuration gyro out performed the reduced configuration gyro by a factor of two-to-one. However, this is mainly due to the differences in the temperature sensitivity of the analog demodulation electronics. The bias temperature sensitivity for the minimum configuration was measured at 0.03 °/s or 108 °/hr for one standard deviation. The reduced configuration performed at 0.07 °/s or 252 °/hr. The scale factor non-linearity for both configurations was similar, as indicated in Table 1. A level of 0.2% rms was achieved for the typical automotive rotation rate range of +/- 50 °/s.

## Claims

1. An interferometric fiber optic gyroscope (IFOG) system comprising:
a fiber sensing coil (4; 24); a semiconductor light source (1; 21) emitting light with an associated light source intensity, the source having a front facet output and a back facet output;
an optical coupler (3; 23) attached to the front facet output for receiving the light from the light source (1; 21), the coupler (3; 23) creating two substantially equal intensity light beams for simultaneous transmission into the sensing coil (4; 24);
wherein the fiber sensing coil (4; 24) supplies return light to the coupler (3; 23) from the equal intensity light beams and the coupler (3; 23) combines and interferes the return light into a combined light beam;
an optical phase modulator (9; 34) coupled to the coil (4; 24) and having a phase modulation amplitude;
an oscillator (8; 33) coupled to the modulator (9; 34) and producing a periodic voltage which controls the phase modulation amplitude;
light detecting means (5; 25) coupled to the light source (1; 21) at the back facet for detecting the combined light beam being transmitted through the light source (1; 21) and converting the combined light beam into an electric signal;
an amplifier (6; 27) receiving the electrical signal and splitting the electrical signal into an oscillator frequency signal and a second harmonic signal (F2), and
electrical signal processing means (7; 28, 29, 30, 31) coupled to the amplifier (6; 27) for processing the oscillator frequency voltage and providing an output signal proportional to the angular rotation rate input of the sensing coil (4; 24),
**characterized in**
**that** the light source intensity is controlled by the second harmonic signal (F2) so as to maintain a constant detected optical power of the light that has passed through the gyro sensing region (4; 24).

2. The IFOG system of claim 1, **characterized in that** the optical phase modulator (9, 34) includes a piezoelectric transducer as an active part of the oscillator (8, 33) and that the fundamental frequency tracks the resonance frequency of the optical phase modulator (9, 34).

3. The IFOG system of claim 1, **characterized in that** the oscillator is a self-resonant oscillator (8, 33) with an automatic gain control (AGC) adapted to maintain a stable modulator drive amplitude.

4. The IFOG system of claim 3, **characterized in that** the self-resonant oscillator (33) is a Colpitts oscillator.

## Patentansprüche

1. Ein interferometrisches Lichtleitfasergyroskopsystem (IFOG-System), das aufweist:
eine Sensor-Lichtleitfaserwindung (4; 24);
eine Halbleiterlichtquelle (1; 21), die Licht mit einer zugehörigen Lichtquellenintensität abgibt, wobei die Quelle einen vorderen Kristallflächenausgang und einen hinteren Kristallflächenausgang aufweist;
einen Optokoppler (3; 23), der an den vorderen Kristallflächenausgang gekoppelt ist, um Licht von der Lichtquelle (1; 21) zu empfangen, wobei der Koppler (3; 23) zwei Lichtstrahlen mit im Wesentlichen gleicher Intensität für eine gleichzeitige Übertragung an die Sensorwindung (4, 24) erzeugt; wobei die Sensor-Lichtleitfaserwindung (4; 24) aus den Lichtstrahlen gleicher Intensität zurückgeleitetes Licht an den Koppler (3; 23) liefert, und wobei der Koppler (3, 23) das zurückgeleitete Licht zu einem kombinierten Lichtstrahl kombiniert und interferiert;
einen optischen Phasenmodulator (9; 34), der an die Windung (4; 24) gekoppelt ist und der eine Phasenmodulationsamplitude aufweist;
einen Oszillator (8; 33), der an den Modulator (9; 34) gekoppelt ist und der eine periodische Spannung erzeugt, die die Phasenmodulationsamplitude steuert;
Lichtdetektionsmittel (5; 25), die an die Lichtquelle (1; 21) an der hinteren Kristallfläche gekoppelt sind, um den durch die Lichtquelle (1; 21) übertragenen kombinierten Lichtstrahl zu detektieren und den kombinierten Lichtstrahl in ein elektrischen Signal umzuwandeln;
einen Verstärker (6; 27), der das elektrische Signal empfängt und der das elektrische Signal in ein Oszillatorfrequenzsignal und ein zweites harmonisches Signal (F2) aufteilt; und
elektrische Signalverarbeitungsmittel (7; 28, 29, 30, 31), die an den Verstärker (6; 27) gekoppelt sind, zum Verarbeiten der Oszillatorfrequenzspannung und Bereitstellen eines Ausgangssignals, das proportional ist zu dem Winkelrotationsgeschwindigkeitseingangssignal der Sensorwindung (4; 24),
**dadurch gekennzeichnet, dass**
die Lichtquellenintensität durch das zweite harmonische Signal (F2) gesteuert wird, um so eine konstante detektierte optische Leistung des Lichts aufrecht zu erhalten, das den Gyroskopsensorbereich (4; 24) passiert hat.

2. IFOG-System nach Anspruch 1, **dadurch gekennzeichnet, dass** der optische Phasenmodulator (9; 34) einen piezoelektrischen Wandler als aktiven Teil des Oszillators (8; 33) umfasst, und dass die Grundfrequenz der Resonanzfrequenz des optischen Phasenmodulators (9; 34) folgt.

3. IFOG-System nach Anspruch 1, **dadurch gekennzeichnet, dass** der Oszillator ein eigenresonanter Oszillator (8; 33) mit einer automatischen Verstärkungsregelung (AGC) ist, die dahingehend angepasst ist, eine stabile Modulatortreiberamplitude aufrecht zu erhalten.

4. IFOG-System nach Anspruch 1, **dadurch gekennzeichnet, dass** der eigenresonante Ozillator (33) ein Colpitts-Oszillator ist.

## Revendications

1. Gyroscope interférométrique, à fibre optique (IFOG) comprenant :
- une bobine de détection à fibre (4, 24),
- une source lumineuse semi-conductrice (1, 21) émettant de la lumière avec une intensité correspondante à la source, la source ayant une sortie par la face frontale et une sortie par la face arrière,
- un coupleur optique (3, 23) fixé à la sortie de la face frontale pour recevoir la lumière de la source lumineuse (1, 21), le coupleur (3, 23) créant deux faisceaux lumineux d'intensité pratiquement égale pour les transmettre simultanément à la bobine de détection (4, 24),
- la bobine de détection à fibre (4, 24) fournissant un retour de lumière au coupleur (3, 23) à partir des faisceaux de lumière d'intensité égale et le coupleur (3, 23) combinant et interférant la lumière de retour en un faisceau lumineux combiné,
- un modulateur de phase optique (9, 34) couplé à la bobine (4, 24) et modulant la phase,
- un oscillateur (8, 33) couplé au modulateur (9, 34) et générant une tension périodique qui commande la modulation de la phase,
- un moyen de détection de lumière (5, 25) couplé à la source lumineuse (1, 21) au niveau de la face arrière pour détecter le faisceau lumineux combiné transmis à travers la source lumineuse (1, 21) et convertissant le faisceau lumineux combiné en un signal électrique,
- un amplificateur (6, 27) recevant le signal électrique et divisant le signal électrique en un signal de fréquence d'oscillateur et un signal de la seconde harmonique (F2), et
- un moyen de traitement du signal électrique (7, 28, 29, 30, 31) couplé à l'amplificateur (6, 27) pour traiter la tension de la fréquence de l'oscillateur et fournir un signal de sortie proportionnel à la rotation angulaire du taux d'entrée de la bobine de détection (4, 24),
**caractérisé en ce que**
l'intensité de la source lumineuse est commandée par le signal de la seconde harmonique (F2) pour maintenir constante la puissance optique de la lumière qui traverse la région de détection gyroscopique (4, 24).

2. Gyroscope IFOG selon la revendication 1,
**caractérisé en ce que**
le modulateur optique de phase (9, 34) comporte un transistor piézo-électrique comme élément actif de l'oscillateur (8, 33) et la fréquence fondamentale suit la fréquence de résonance du modulateur optique de phase (9, 34).

3. Gyroscope IFOG selon la revendication 1,
**caractérisé en ce que**
l'oscillateur est un oscillateur autorésonant (8, 33) à commande automatique de gain (CAG) adapté pour maintenir une amplitude d'entraînement stable du modulateur.

4. Gyroscope IFOG selon la revendication 3,
**caractérisé en ce que**
l'oscillateur autorésonnant (33) est un oscillateur Colpitts.
